# EUROPÄISCHE PATENTANMELDUNG

(11) **EP 3 705 161 A1**
(43) Veröffentlichungstag der Anmeldung: **09.09.2020**
(21) Anmeldenummer: 20161676.0
(22) Anmeldetag: 06.03.2020
(51) Int. Cl.: A63C 5/12, B29C 70/22

(54) **GLEITBRETT MIT FASERVERBUNDWERKSTOFF**

(30) Priorität: 08.03.2019 DE 102019105960
(71) Anmelder: Völkl Sports GmbH, 94315 Straubing (DE)
(72) Erfinder: Heil, Tobias, 94360 Mitterfels (DE)
(74) Vertreter: SSM Sandmair

(57) **Zusammenfassung**

Schneegleitbrett, vorzugsweise Gleitbrett, umfassend: einen vorderen Gleitbrettbereich (A), der ein vorderes Gleitbrettende umfasst, einen hinteren Gleitbrettbereich (C), der ein hinteres Gleitbrettende umfasst, einen in Gleitbrettlängsrichtung (X) zwischen dem vorderen Gleitbrettbereich (A) und dem hinteren Gleitbrettbereich (C) erstreckten Bindungsbereich (B) zur Befestigung einer Gleitbrettbindung zum Halten eines Schuhs, wobei das Schneegleitbrett eine mehrschichtige Struktur aufweist, die mindestens einschließt: einen Gleitbrettkern (1), obere Schichten (2; 8), die oberhalb des Gleitbrettkerns (1) angeordnet sind, und untere Schichten (3; 5), die unterhalb des Gleitbrettkerns (1) angeordnet sind wobei wenigstens eine Schicht (2) der oberen Schichten (2; 8) und/oder wenigstens eine Schicht (3) der unteren Schichten (3; 5) einen Faserverbundwerkstoff aufweist, wobei der Faserverbundwerkstoff eine Vielzahl von Fasern (20) aufweist, dadurch gekennzeichnet, dass der Faserverbundwerkstoff in einem Bereich (A, B, C, H) eine Faserorientierung aufweist, welche innerhalb des Bereichs (A, B, C, H) variiert.

## Beschreibung

Die Erfindung betrifft ein Schneegleitbrett, vorzugsweise einen Gleitbrett. Das Schneegleitbrett umfasst einen vorderen Gleitbrettbereich, der ein vorderes Gleitbrettende umfasst, einen hinteren Gleitbrettbereich, der ein hinteres Gleitbrettende umfasst, und einen in Gleitbrettlängsrichtung zwischen dem vorderen Gleitbrettbereich und dem hinteren Gleitbrettbereich erstreckten Bindungsbereich zur Befestigung einer Gleitbrettbindung zum Halten eines Schuhs. Das Schneegleitbrett weist eine mehrschichtige Struktur auf, die wenigstens einen Gleitbrettkern, eine oder mehrere obere Schicht/en, die oberhalb des Gleitbrettkerns angeordnet ist/sind, und eine oder mehrere untere Schicht/en, die unterhalb des Gleitbrettkerns angeordnet ist/sind, aufweist. Eine obere Schicht und/oder eine untere Schicht umfasst einen Faserverbundwerkstoff, der eine Vielzahl von Fasern aufweist.

Im Bereich der Schneegleitbretter, insbesondere bei Snowboards, ist es bekannt, Fasern, wie beispielsweise Glas- oder Kohlefasern, einzusetzen, um ein Gewicht des Snowboards gering zu halten und gleichzeitig gezielt Eigenschaften, wie zum Beispiel das Verhalten bei Torsion, positiv zu beeinflussen. Beispiele solcher faserverstärkten Snowboards sind unter anderem aus der DE 10 2014 005 301 A1 und der US 7 419 180 B2 bekannt. Die Fasern oder zumindest ein Großteil der Fasern verlaufen parallel zu einer Längsachse des Snowboards. Im Bereich, in dem die Bindung montiert ist, können zusätzlich Fasern quer zur Längsrichtung verlaufen, um diesen Bereich zusätzlich zu verstärken, wobei diese querverlaufenden Fasern eine eigene Schicht bilden, unabhängig von der Schicht mit den in Längsrichtung verlaufenden Fasern.

Es ist eine Aufgabe der Erfindung ein Schneegleitbrett mit verbesserten Fahreigenschaften und geringem Gewicht zu Verfügung zu stellen.

Diese Aufgabe wird durch das Schneegleitbrett mit den Merkmalen des Anspruchs 1 erfüllt.

Ein Aspekt der Erfindung betrifft ein Schneegleitbrett, vorzugsweise einen Gleitbrett. Das Schneegleitbrett umfasst einen vorderen Gleitbrettbereich, der ein vorderes Gleitbrettende umfasst, einen hinteren Gleitbrettbereich, der ein hinteres Gleitbrettende umfasst, und einen in Gleitbrettlängsrichtung zwischen dem vorderen Gleitbrettbereich und dem hinteren Gleitbrettbereich erstreckten Bindungsbereich zur Befestigung einer Gleitbrettbindung zum Halten eines Schuhs. Das Schneegleitbrett weist eine mehrschichtige Struktur auf, die wenigstens einen Gleitbrettkern, eine oder mehrere obere Schicht/en, die oberhalb des Gleitbrettkerns angeordnet ist/sind, und eine oder mehrere untere Schicht/en, die unterhalb des Gleitbrettkerns angeordnet ist/sind, aufweist. Eine obere Schicht und/oder eine untere Schicht umfasst einen Faserverbundwerkstoff, wobei der Faserverbundwerkstoff in wenigstens einem Abschnitt eine Faserorientierung aufweist, die innerhalb des Abschnitts variiert.

Bei dem Faserverbundwerkstoff kann es sich insbesondere um ein Langfaserprodukt handeln, wobei die Langfasern anisotrope Eigenschaften aufweisen. Das heißt, dass nur in Faserlängsrichtung die maximalen mechanischen Eigenschaften, wie Festigkeit und Steifigkeit, vorhanden sind oder erreicht werden können. Bei Differenzen zwischen Beanspruchungsrichtung und Faserausrichtung reduzieren sich die ausgeprägten unidirektionalen mechanischen Eigenschaften sehr deutlich. Bei dem hier beschriebenen Faserverbundwerkstoff werden daher die Fasern so angeordnet oder ausgerichtet, dass sie möglichst genau die auf das Schneegleitbrett in der Nutzungsphase lokal einwirkenden Kraftlinien wiederspiegeln.

Bei dem Abschnitt kann es sich um einen Bereich in dem Faserverbundwerkstoff oder Faserverbundwerkstoffgebilde handeln, dessen Erstreckung klar definiert und mit dem Auge bevorzugt gut zu erkennen ist, und der an wenigstens einen weiteren Bereich angrenzt, der eine andere Faserorientierung und bevorzugt auch eine andere optische Erscheinung hat. Der Abschnitt kann beispielsweise durch einen der Gleitbrettbereiche gebildet sein oder Teil wenigstens eines der Gleitbrettbereiche sein. Der Abschnitt kann zum Beispiel der vordere oder hintere Gleitbrettbereich sein. Wenn sich der Faserverbundwerkstoff oder das Faserverbundwerkstoffgebilde über das komplette Gleitbrett erstreckt, bildet das Gleitbrett insgesamt den Abschnitt.

Bei den Fasern des Faserverbundwerkstoffs kann es sich um Fasern aus Kohlenstoff, Glas, Aramid, Stein (zum Beispiel Basalt), Naturgarn, Naturfaser (zum Beispiel Bambus), Kunstfasern (zum Beispiel Aramide), Kunststoff (wie ein Thermoplastik), Keramik, Textil oder auch Metall (zum Beispiel Stahl- oder Kupferdraht) handeln. Auch andere geeignete, hier nicht explizit genannte Materialien sind vom Umfang der Anmeldung umfasst, das heißt, die Aufzählung ist nicht abschließend. Statt der Fasern oder zusätzlich dazu kann/können ein oder mehrere Rovings verwendet werden, wobei als Roving ein Bündel oder Strang aus parallel angeordneten Fasern, ein Geflecht von Fasern und ein Seil aus Fasern bezeichnet wird. Ein einzelner Roving kann aus zahlreichen identischen Fasern bestehen oder aus einer Mischung unterschiedlicher Faser, die individuell zusammengestellt werden kann, um beispielsweise ganz bestimmte Eigenschaften, wie Elastizität, Härte, Torsionsvermögen etc. des Rovings zu designen.

Als Faserverbundwerkstoff soll hier ein Verbundwerkstoff verstanden werden, bei dem eine Faser/ein Roving oder mehrere Fasern/mehrere Rovings in einer Matrix aus einem Trägermaterial eingebettet sind oder bei dem die Faser/n oder Rovings mit einem Grundmaterial verbunden und optional in ein Trägermaterial eingebettet sind. Der Verbundwerkstoff kann auch Fasern und Rovings umfassen. Für die gesamte Beschreibung gilt, dass das zu den Fasern Gesagte - mutatis mutandis - auch für die Rovings gilt, und umgekehrt, wenn nicht ausdrücklich etwas anderes ausgesagt ist. Bei dem Grundmaterial kann es sich um einen Untergurt oder einen Obergurt des Schneegleitbretts handeln oder um eine Fließ oder ein Gewebe, mit dem die Fasern verbunden werden. Als Trägermaterial wird beispielsweise ein Harz oder ein Kunststoff bezeichnet, das/der die Fasern zumindest teilweise umgibt, so dass die Fasern in Verbindung mit dem Harz oder dem Kunststoff ein matten- oder plattenartiges Gebilde bilden. Das Grundmaterial, das Trägermaterial, die Fasern und/oder die Rovings sind bei Normaltemperatur bevorzugt fest und können zum Beispiel durch Wärmezufuhr in einen verformbaren Zustand versetzt werden, in dem eine Verformung möglich ist, ohne dass der Faserverbundwerkstoff bricht.

Die Fasern können auf das Grundmaterial in einem Verlege-Stickverfahren aufbracht oder verlegt und befestigt werden, bevorzug mittels einer entsprechenden Vorrichtung automatisch aufgelegt und befestigt werden. Die Befestigung kann dadurch erfolgen, dass die Faser nach dem oder unmittelbar nach dem Verlegen mit einem zusätzlichen Faden mit dem Grundmaterial verbunden wird. Das Auflegen kann automatisch von einer bevorzugt programmierbaren Auflegevorrichtung vorgenommen werden. Das Programm gibt ein Auflagemuster für die Faser vor, das individuell für unterschiedliche Produkte an einem Computer ausgearbeitet werden kann. Die Auflegevorrichtung kann ein Magazin für eine Endlosfaser und/oder ein Endlosroving umfassen, und eine Schneidevorrichtung, um die Faser am Ende eines Auflegeschrittes abzuschneiden. Der Faden kann die Faser und das Grundmaterial zum Befestigen auf dem Grundmaterial durchstechen oder, was bevorzugt ist, mittels einer Schlaufe mit dem Grundmaterial verbinden, ohne dabei das Material der Faser zu durchstechen, aber bevorzugt das Grundmaterial. Bei dem Verlege-Stickverfahren kann es sich insbesondere um ein Tailored-Fiber-Placement (TFP) Verfahren handeln.

Der Faden kann ebenfalls aus einer oder mehreren Fasern gebildet sein, die die notwendige Flexibilität aufweisen, um als Stickfaden benutzt zu werden. So kann der Faden aus einem Material sein, dass einen Teil eines Trägermaterials für die aufgelegte Faser oder den aufgelegten Roving bildet, oder aus einem Material, das die Eigenschaften des Faserverbundwerkstoffs weiter verbessert. Wenn eine Faser oder ein Roving nach dem Auflegen und dem Befestigen auf dem Grundmaterial zusätzlich in ein Trägermaterial eingebettet werden soll, so können einzelne Fasern aus einem Material gebildet sein, das, zum Beispiel nach einer Wärmebehandlung des Faserverbundwerkstoffes, dieses Trägermaterial bildet oder zumindest mitbildet.

Das Auflegemuster kann zahlreich kurze Fasern und/oder Rovings umfassen, die nebeneinander und/oder übereinander angeordnet sind. Nebeneinander angeordnete Fasern können parallel zueinander verlaufen oder zum Beispiel von einem gemeinsamen Punkt oder von einer gemeinsamen Grundlinie, die zum Beispiel durch ein erstes Ende der Fasern gebildet wird, V-förmig auseinander oder aufeinander zu streben, und die den ersten Enden gegenüberliegenden Enden können zum Beispiel bis an einen äußeren Rand des Faserverbundwerkstoffs reichen. Andere Fasern können in Richtung einer Längsachse des Faserverbundwerkstoffes verlaufen, wieder andere zum Beispiel quer zur Längsachse. Die Bereiche des Faserverbundwerkstoffes mit den unterschiedlich ausgerichteten Fasern können klar voneinander getrennt sein oder nur geringfügig überlappen.

Bezogen auf das Schneegleitbrett kann dies bedeuten, dass in einem vorderen Gleitbrettbereich oder Schaufelbereich die Fasern im Wesentliche strahlenförmig angeordnet sind, im Bindungsbereich zum Beispiel im Wesentlichen quer zur Gleitbrettlängsrichtung und/oder parallel zur Gleitbrettlängsrichtung, und in einem hinteren Gleitbrettbereich oder hinterem Endbereich im Wesentlichen senkrecht zu den Außenkanten des hinteren Endes oder ebenfalls strahlenförmig ausgerichtet sind. Andere Anordnungen sind möglich und können frei gewählt werden, da das Verfahren eine beliebige Ausrichtung jeder einzelnen der Fasern erlaubt. Die Fasern können auch zumindest im vorderen und/oder hinteren Gleitbrettbereich gitterförmig verlegt sein, so dass sie in einer Draufsicht auf die Skioberfläche zum Beispiel Rauten bilden.

Eine andere Anordnung der Fasern kann beispielweise fischgrätenförmig sein, beginnend am oder im Bindungsbereich, mit einer "Hauptgräte" oder einem Hauptstrang, der sich ausgehend vom Bindungsbereich in der Mitte des Gleitbretts, das heißt, in einer Draufsicht auf das Gleitbrett in der Mitte zwischen den beiden Außenrändern des Gleitbretts, in Richtung des vorderen und/oder des hinteren Gleitbrettendes erstreckt. Von diesem Hauptstrang können zahlreiche Nebenstränge abzweigen, die sich in sich ändernden Winkeln in Richtung des vorderen bzw. des hinteren Gleitbrettendes erstrecken, wobei die Anzahl der nebeneinander verlaufenden Nebenstränge mit zunehmendem Abstand vom Bindungsbereich zunehmen kann. Die Fasern der Nebenstränge können sich jeweils bis zu einer der seitlichen Gleitbrettkanten erstrecken und dort bevorzugt enden. Zusätzlich können weitere Fasern sich vom vorderen und/oder hinteren Gleitbrettende in Richtung Bindungsbereich erstrecken. Bei den weiteren Fasern kann es sich um zwei unabhängige Faserstränge handeln, die entlang einer Gleitbrettmittellängsachse gespiegelt angeordnet sind und nicht im Bereich des oben genannten Hauptstranges verlaufen. Diese Fasern können sich vom jeweiligen Gleitbrettende in unterschiedlichen Winkeln ebenfalls bis zu einem Außenrand des Gleitbretts erstrecken. Bevorzugt sind die weiteren Fasern nur in wenigstens einem der Bereiche des Gleitbretts vorhanden, die sich zwischen dem jeweiligen Gleitbrettende und dem Bindungsbereich erstrecken, ohne sich bis an den Bindungsbereich heran oder in den Bindungsbereich hinein zu erstrecken. Die Fasern des Hauptstrangs und der Nebenstränge sind bevorzugt aus einem gleichen Material gebildet und dienen dazu, das Gleitbrett zu verstärken und ihm gewünschte Eigenschaften zu geben. Die weiteren Fasern in dem jeweiligen Gleitbrettendbereich können aus einem anderen Material gebildet sein und beeinflussen das Verhalten des Gleitbretts lokal. Der Verlauf der beschriebenen Fasern kann individuell an die Fahreigenschaften von insbesondere Spitzensportlern und ambitionierten Freizeitsportlern angepasst werden, um deren Leistung zu optimieren. Dazu müssen in einem Testrig oder auf der Piste entsprechende Messungen am Gleitbrett vorgenommen werden. Aus diesen Messungen kann dann der individueller Faserverlauf berechnet werden, um das optimale Sportgerät zu Verfügung zu stellen.

Das Muster kann alternativ aus wenigen oder einer einzigen Endlosfaser und/oder aus wenigen oder einem einzigen Endlosroving gebildet sein. Das heißt, in einer Draufsicht auf das Schneegleitbrett kann die jeweilige Faser mäander- oder schlingenförmig verlaufen. Eine Schlaufe umfasst einen Schlaufenbogen oder eine Bucht, die sich an den Schlaufenbogen oder die Bucht einer weiteren Schlaufe anschließen kann, was beispielweise ein wellenförmiges Muster ergibt. Der Schlaufenbogen kann an wenigstens einem Ende, bevorzugt an beiden Enden, in einen Schlaufenlängsabschnitt übergehen, so dass die Schlaufe eine U-förmige oder ähnliche Form aufweist. Das Muster kann innere Schlaufenbögen und äußere Schlaufenbögen umfassen, wobei die inneren Schlaufenbögen zumindest im vorderen Gleitbrettbereich im Regelfall näher an einer Längsmittelachse des Schneegleitbretts liegen, als die äußeren Schlaufenbögen, die sich bevorzugt bis an oder nahe an eine Außenkante des Schneegleitbretts erstrecken. Es können auch mehrere Schlaufen ineinander liegen, also eine äußere Schleife und in der äußeren Schleife eine oder mehrere innere Schlaufen.

Die Schlaufen können langestreckt sein und in eine Schlaufenlängsrichtung erstreckte Schlaufenlängsabschnitte haben. Die Schlaufenlängsabschnitte können im Wesentlichen gerade sein, so dass die sich in Schlaufenlängsrichtung erstreckenden Schlaufenlängsabschnitte einer Schlaufe im Wesentlichen parallel zueinander verlaufen. Alternativ können die Schlaufenlängsabschnitte einer Schleife aufeinander zu oder voneinander weg gerichtet sein. Die Schlaufenlängsabschnitte können bogenförmig sein, das heißt, sich bogenförmig in die Schlaufenlängsrichtung erstrecken. Die Verstärkungsstruktur kann Schlaufen oder Buchten und/oder Schlaufen mit Buchten und geraden Schlaufenlängsabschnitten und/oder Schlaufen mit Buchten und bogenförmigen Schlaufenlängsabschnitten und/oder Schlaufen mit Buchten und Schlaufenlängsabschnitte mit geraden Schlaufenabschnitten und mit bogenförmigen Schlaufenlängsabschnitten umfassen. Einzelne Schlaufenlängsabschnitte können auch in Zickzack-Form, z-förmig, schlangen-, wellenförmig oder schneckenförmig verlegt sein, oder eine andere Form aufweisen, mit der spezielle lokal geforderte Eigenschaften des Schneegleitbretts optimal unterstützt oder optimiert werden können. Für die Anordnung und die Ausrichtung der Schlaufen, insbesondere der Schlaufenlängsabschnitte gilt das oben Gesagte entsprechend. So kann die Richtung der Schlaufenlängsabschnitte und/oder ein Abstand zwischen benachbart nebeneinander liegenden Schlaufenlängsabschnitten in Gleitbrettlängsrichtung variieren. So können beispielsweise im vorderen Gleitbrettbereich und im hinteren Gleitbrettbereich jeweils eine Torsionsverstärkung und im Bindungsbereich eine Längsverstärkung erhalten werden.

Die Schlaufenlängsrichtung kann im vorderen Gleitbrettbereich und/oder im hinteren Gleitbrettbereich unter einem Neigungswinkel zu einer zentralen Längsachse des Schneegleitbretts weisen, wobei der Neigungswinkel bevorzugt gleich oder größer 0° und gleich oder kleiner 90° ist. Bevorzugt kann der Neigungswinkel α in Gleitbrettlängsrichtung variieren. So kann sich der Neigungswinkel vom vorderen Gleitbrettende und/oder vom hinteren Gleitbrettende aus in Gleitbrettlängsrichtung vergrößern. Vom Bindungsbereich aus in Gleitbrettlängsrichtung kann sich der Neigungswinkel ebenfalls vergrößern. Der Neigungswinkel am vorderen Gleitbrettende und/oder am hinteren Gleitbrettende kann kleiner als 20° oder kleiner als 10° sein.

Der Faserverbundwerkstoff kann eine Fläche haben, die der Fläche eines Untergurts oder eines Obergurts oder einer anderen Schicht der Schneegleitbrett-Schichtstruktur entspricht. Der Faserverbundwerkstoff kann alternativ einen Rahmen bilden, der das Schneegleitbrett insbesondere im vorderen Gleitbrettbereich oder Schaufelbereich und/oder im hinteren Gleitbrettbereich oder hinterem Endbereich und optional im Bindungsbereich verstärkt, um die Torsionssteifigkeit in diesem Bereich oder diesen Bereichen zu erhöhen. Das heißt, der Faserverbundwerkstoff kann einen Verstärkungsrahmen bilden, der das Schneegleitbrett lokal verstärkt, bevorzugt gezielt lokal verstärkt.

Mit anderen Worten kann die Faser/der Roving oder können die Fasern/Rovings in der Draufsicht in einem in Längsrichtung erstreckten linken Seitenschenkel des Verstärkungsrahmens, einem in Gleitbrettlängsrichtung erstreckten rechten Seitenschenkel des Verstärkungsrahmens und wenigstens einem quer zur Gleitbrettlängsrichtung erstreckten, die Seitenschenkel verbindenden Querschenkel des Verstärkungsahmens verlaufen und die Seitenschenkel können quer zur Gleitbrettlängsrichtung außerhalb des Querschenkels einen Schenkelabstand voneinander aufweisen, so dass zwischen den Seitenschenkeln ein zentraler Abschnitt des Schneegleitbretts von dem Faserverbundwerkstoff frei bleibt.

Der Verstärkungsrahmen kann ein im Wesentlichen flacher Körper sein, der zum Beispiel gemeinsam mit einem nicht verstärkten Grundmaterial eine Lage des Schneegleitbretts bildet oder mitbildet, dabei aber nicht über eine Außenseite des fertigen Schneegleitbretts vorsteht und keine seitlichen Biegekanten aufweist, die zum Beispiel schräg oder senkrecht zu einer Schneegleitbrettoberfläche gerichtet sind. Eine Gesamtfläche in einer Draufsicht auf den Verstärkungsrahmen ist kleiner, bevorzugt um ein Vielfaches kleiner als eine entsprechende Gesamtfläche des Gleitbretts oder eine das Gleitbrett mitbildenden Materiallage. Dies wirkt sich positiv auf das Gesamtgewicht des Gleitbretts aus.

Die Seitenschenkel des Verstärkungsrahmens sind quer zur Schneegleitbrettlängsrichtung voneinander beabstandet, mit anderen Worten, sie weisen quer zur Gleitbrettlängsrichtung einen Schenkelabstand voneinander auf. Der rechte Seitenschenkel kann quer zur Gleitbrettlängsrichtung eine Breite haben, die kleiner ist als der Schenkelabstand. Gleiches gilt für den linken Seitenschenkel. Die Breite des rechten Seitenschenkels kann bevorzugt gleich der Breite des linken Seitenschenkels sein. Eine aufaddierte Breite aus der Breite des linken Seitenschenkels und der Breite des rechten Seitenschenkels in jeder Schnittlinie quer zur Schneegleitbrettlängsrichtung kann zumindest in einem überwiegenden Teil des Verstärkungsrahmens gleich, größer oder kleiner dem Schenkelabstand sein.

Der Seitenschenkelabstand kann zumindest über einen überwiegenden Teil der Länge des Verstärkungsrahmens konstant sein. Die Breite des rechten Seitenschenkels und die Breite des linken Seitenschenkels können sich von einem vorderen Ende des Schaufelbereichs, respektive des dort gebildeten Querschenkels, in Richtung auf den Bindungsbereich zu verringern, vorzugsweise kontinuierlich, verringern.

Der linke Seitenschenkel kann sich vom Querschenkel aus längs des linken Seitenrands des Schneegleitbretts erstrecken, der rechte Seitenschenkel vom Querschenkel aus längs des rechten Seitenrands des Schneegleitbretts. In einer Draufsicht auf den Verstärkungsrahmen kann der Querschenkel die Spitze des Schaufelbereichs des Schneegleitbretts oder das hintere Ende des Schneegleitbretts bilden.

Bevorzugt erstrecken sich der linke Seitenschenkel und der rechte Seitenschenkel vom Querschenkel ausgehend in Richtung auf den Bindungsbereich bis maximal zum oder in den Bindungsbereich. Der Bindungsbereich oder Bindungsbefestigungsbereich des Schneegleitbretts erstreckt sich in Schneegleitbrettlängsrichtung bis unter einen Vorderbacken und unter einen Hinterbacken der auf dem Schneegleitbrett befestigten Gleitbrettbindung. Das heißt, der rechte Seitenschenkel und der linke Seitenschenkel können vom Querschenkel aus gesehen in Schneegleitbrettlängsrichtung vor oder am Beginn des Bindungsbereichs enden.

Der Verstärkungsrahmen kann wenigstens aus einem ersten oder vorderen Verstärkungsrahmenteil für den vorderen Gleitbrettbereich, und einem zweiten oder hinterem Verstärkungsrahmenteil für den hinteren Gleitbrettbereich bestehen. Der vordere Verstärkungsrahmenteil und der hintere Verstärkungsrahmenteil sind bevorzugt nicht miteinander verbunden. Die beiden Verstärkungsrahmenteile berühren sich auch nicht, so dass das Gewicht des geteilten Verstärkungsrahmens gegenüber einem umlaufenden Verstärkungsrahmen nochmals reduziert ist.

Einer der oder beide Verstärkungsrahmenteile kann/können im Wesentlichen hufeneisen- oder U-förmige geformt sein, wobei die offenen Enden des hufeisenförmigen vorderen Verstärkungsrahmenteils und die offenen Enden des hufeisenförmigen hinteren Verstärkungsrahmenteils sich am Schneegleitbrett in Schneegleitbrettlängsrichtung gegenüberliegen.

Der vordere Verstärkungsrahmenteil und der hintere Verstärkungsrahmenteil können bei einem mehrschichtigen Aufbau des Schneegleitbretts eine eigene Schicht bilden, einer einzigen Schicht oder unterschiedlichen Schichten zugeordnet sein.

Eine Erstreckung des vorderen Verstärkungsrahmenteils in die Schneegleitbrettlängsrichtung kann größer sein als eine Erstreckung des hinteren Verstärkungsrahmenteils in die Schneegleitbrettlängsrichtung, et vice versa.

Der Verstärkungsrahmen kann mehrschichtig aufgebaut sein und beispielsweise eine Lage aus einem Leichtmetall oder einer Leichtmetallfolie, wie Titanal, und eine Lage aus dem Faserverbundwerkstoff umfassen. Die Leichtmetallfolie kann eine Vielzahl von Bohrungen aufweisen, durch die der Faden zur Befestigung der Faser oder des Rovings geführt werden kann. Das heißt, die Leichtmetallfolie kann das Grundmaterial für das TFP-Verfahren bilden, mit dem die Faser oder das Roving wie bereits beschrieben verbunden werden. Die Lage aus Leichtmetall kann von dem Faserverbundwerkstoff ummantelt oder in dem Faserverbundwerkstoff eingebettet sein, oder umgekehrt. Dabei können die Lage aus Leichtmetall und die Lage aus dem Verbundwerkstoff unterschiedliche Formen oder Konturen aufweisen, die nur bereichsweise überlappen, so dass der fertige Verstärkungsrahmen Bereich umfasst, die nur Leichtmetall aufweisen, Bereiche, die alleine durch das Faserverbundmaterial gebildet sind, und Bereiche, die aus dem Leichtmetall und dem Faserverbundmaterial gebildet sind. Es versteht sich von selbst, dass das zur Metallfolie Gesagte auch für jedes andere Folien- oder Plattenmaterial gilt, das vom Fachmann als Grundmaterial für eine spezielle Nutzung ausgewählt wird.

Bei dem Kern kann es sich um einen Holzkern handeln, der eine Verstärkung zum Beispiel aus einem Fiberglas aufweisen kann.

Deckt der Verstärkungsrahmen oder das Faserverbundmaterial den Bindungsbereich, der wie bereits beschrieben in Schneegleitbrettlängsrichtung zwischen dem vorderen Verstärkungsrahmenteil und dem hinteren Verstärkungsrahmenteil angeordnet sein kann, nicht ab, kann im Bindungsbereich zur Verstärkung zusätzlich zum Beispiel oberhalb des Kerns und unterhalb eines ersten Obergurts eine Verstärkungsplatte, beispielsweise eine Leichtmetall- oder Faserverbundwerkstoffplatte angeordnet sein. Diese Verstärkungsplatte kann eine Stärke oder Dicke aufweisen, die kleiner oder gleich der Stärke oder Dicke des Verstärkungs- oder Leichtmetallrahmens ist. Bevorzugt ist es, dass sich der Verstärkungsrahmen und die Verstärkungsplatte in einer Draufsicht von oben auf das Schneegleitbrett nicht oder nur geringfügig überlappen.

Der vordere Schaufelbereich und der hintere Endbereich des Gleitbretts können zusätzlich ein leichtes Carbon-Material umfassen, um die notwendige Torsionssteifigkeit zu erreichen und dabei das Gesamtgewicht des Gleitbretts gering zu halten. Das Schneegleitbrett kann ein Gleitbrett sein, der in einer Seitenansicht in Gleitbrettlängsrichtung die Form eines gestreckten W's hat, mit anderen Worten von dem vorderen oder dem hinteren Ende eine konvexe Kurve, gefolgt von einer konkaven Kurve, gefolgt von einer konvexen Kurve (rocker/camber/rocker) hat. Wobei für die Anmeldung konvex bedeutet, dass ein Scheitelpunkt der konvexen Wölbung oder Kurve bei einem auf einer planen Ebene aufliegenden Gleitbrett auf der Ebene aufliegt, während ein Scheitelpunkt der konkaven Wölbung oder Kurve von der Auflagefläche beabstandet ist. Der konkave Bereich am Gleitbrett kann im Bereich unterhalb der Bindung gebildet sein. Im konkaven Bereich des Gleitbretts ist im Regelfall auch eine Taille ausgebildet.

Die Lage mit oder aus dem Faserverbundwerkstoff kann unmittelbar unter einer oberen Lage des Schneegleitbretts, die die Oberfläche des Schneegleitbretts bildet, liegen. Diese obere Lage kann zumindest bereichsweise transparent sein, so dass das Muster der Faser sichtbar ist und als Designelement verwendet werden kann. Die Lage mit dem Verbundwerkstoff kann auch selbst die Oberfläche des Gleitbretts bilden, die beispielsweise zum Schutz mit einem bevorzugt hammerharten Klarlack überzogen ist. Die die Oberfläche des Schneegleitbretts bildende oberste Schicht kann bedruckbar sein.

Die Oberseite des Schneegleitbretts kann an der Oberseite einen aufragenden erhabenen Oberseitenabschnitt haben, der sich vom Bindungsbereich bis zum oder in den vorderen Gleitbrettbereich und/oder vom Bindungsbereich bis zum oder in den hinteren Gleitbrettbereich erstreckt. Das Faserverbundmaterial oder der Verstärkungsrahmen kann in einer Draufsicht neben und/oder vor und/oder hinter dem erhabenen Oberseitenabschnitt angeordnet sein. Der erhabene Oberseitenabschnitt kann über das Faserverbundmaterial hinaus aufragen.

Ein weiterer Aspekt der Erfindung betrifft eine Lage für ein Schneegleitbrett, das zusammen mit weiteren Lagen und einem Kern und weiteren Teilen einen Schneegleitbrettkörper bildet. Die Lage besteht aus einem Faserverbundwerkstoff und umfasst wenigstens einen Abschnitt, in dem der Faserverbundwerkstoff in eine Faserorientierung aufweist, die innerhalb des Abschnitts variiert. Bevorzug handelt es sich bei dem Abschnitt um einen Bereich in dem Faserverbundwerkstoff oder in der Faserverbundwerkstofflage, dessen Erstreckung klar definiert und mit dem Auge bevorzugt gut zu erkennen ist. Dieser Bereich kann an wenigstens einen weiteren Bereich angrenzt, der eine andere Faserorientierung und bevorzugt auch eine andere optische Erscheinung hat. Der Abschnitt kann beispielsweise in einem, in Längsrichtung der Lage, vorderen und/oder einem hinteren Bereich gebildet sein, und/oder in einem mittleren Bereich, der zwischen dem vorderen Bereich und dem hinteren Bereich liegt. Der Faserverbundwerkstoff kann ein Grundmaterial umfassen, auf das Fasern und/oder Rovings aufgelegt und mit dem die Fasern und/oder Rovings verbunden werden. Bevorzugt erfolgt das Auflegen und Verbinden der Fasern und/oder Rovings, das heißt, die Herstellung des Faserverbundwerkstoffs oder zumindest eines Vorprodukts des Faserverbundwerkstoffs mittels eines Verlege-Stickverfahrens (TFP; "tailored fiber placement"). Bei dem Faserverbundwerkstoff kann es sich insbesondere um den zum ersten Aspekt beschriebenen Faserverbundwerkstoff handeln.

Der Faserverbundwerkstoff kann einen Verstärkungsrahmen bilden, wie er zum ersten Aspekt beschrieben ist. Generell gilt, dass alle Merkmale, die zum Gegenstand des ersten Aspekts insbesondere in Zusammenhang mit dem Faserverbundwerkstoff beschrieben wurden, auch für den Gegenstand des zweiten Aspekts gelten, und umgekehrt.

Die folgenden weiteren Aspekte sind in ähnlich wie Ansprüche formuliert und können die Ansprüche ersetzen oder zu deren Fortbildung herangezogen werden.
Aspekt 1 Schneegleitbrett, vorzugsweise Gleitbrett, umfassend:
   1.1 einen vorderen Gleitbrettbereich (A), der ein vorderes Gleitbrettende umfasst,
   1.2 einen hinteren Gleitbrettbereich (C), der ein hinteres Gleitbrettende umfasst,
   1.3 einen in Gleitbrettlängsrichtung (X) zwischen dem vorderen Gleitbrettbereich (A) und dem hinteren Gleitbrettbereich (C) erstreckten Bindungsbereich (B) zur Befestigung einer Gleitbrettbindung zum Halten eines Schuhs,
   1.4 eine erste Lage (Untergurt, Kern, Obergurt, etc.) und eine zweite Lage (z.B. Toplage), die übereinander angeordnet sind,
   1.5 und ein Fadenmaterial, das auf der ersten Lage angeordnet und relativ zur ersten Lage fixiert ist, um eine durch das Fadenmaterial verstärkte Verstärkungsstruktur (20) zu bilden,
   1.6 wobei das Fadenmaterial einen oder mehrere Fäden (25) umfasst und der jeweilige Faden (25) in Draufsicht auf die erste Lage in nebeneinander liegenden Schlaufen (26) verläuft.
Aspekt 2 Schneegleitbrett nach Aspekt 1, wobei der jeweilige Faden (25) in der Draufsicht mäanderförmig verläuft.
Aspekt 3 Schneegleitbrett nach einem der vorgehenden Aspekte, wobei das Fadenmaterial in einem Tailored-Fiber-Placement-Verfahren auf der ersten Lage verlegt und fixiert ist.
Aspekt 4 Schneegleitbrett nach einem der vorgehenden Aspekte, wobei die Schlaufen (25) jeweils langgestreckt sind und jeweils in eine Schlaufenlängsrichtung (X_{S}) erstreckte Schlaufenlängsabschnitte aufweisen.
Aspekt 5 Schneegleitbrett nach einem der vorgehenden Aspekte, wobei zumindest ein Teil der Schlaufen (26) gerade Schlaufenlängsabschnitte (27), die sich jeweils in eine Schlaufenlängsrichtung (X_{S}) erstrecken, aufweisen.
Aspekt 6 Schneegleitbrett nach einem der vorgehenden Aspekte, wobei zumindest ein Teil der Schlaufen (26) Schlaufenlängsabschnitte (27), die sich jeweils bogenförmig in eine Schlaufenlängsrichtung (X_{S}) erstrecken, aufweisen.
Aspekt 7 Schneegleitbrett nach einem der drei unmittelbar vorgehenden Aspekte, wobei die Schlaufenlängsrichtung (X_{S}) und/oder ein Abstand zwischen benachbart nebeneinander liegenden Schlaufenlängsabschnitten (27) in Gleitbrettlängsrichtung (X) variiert, so dass im vorderen Gleitbrettbereich (A) und im hinteren Gleitbrettbereich (C) jeweils eine Torsionsverstärkung und im Bindungsbereich (B) eine Längsverstärkung gebildet ist.
Aspekt 8 Schneegleitbrett nach einem der vier unmittelbar vorgehenden Aspekte, wobei die Schlaufenlängsrichtung (X_{S}) im vorderen Gleitbrettbereich (A) und/oder im hinteren Gleitbrettbereich (C) unter einem Neigungswinkel α zu einer zentralen Längsachse (X_{A}) des Schneegleitbretts weist, wobei 0° ≤ α ≤ 90°.
Aspekt 9 Schneegleitbrett nach dem vorgehenden Aspekt, wobei der Neigungswinkel α in Gleitbrettlängsrichtung (X) variiert.
Aspekt 10 Schneegleitbrett nach dem vorgehenden Aspekt, wobei sich der Neigungswinkel α vom vorderen Gleitbrettende und/oder vom hinteren Gleitbrettende aus in Gleitbrettlängsrichtung (X) vergrößert.
Aspekt 11 Schneegleitbrett nach dem vorgehenden Aspekt, wobei der Neigungswinkel α am vorderen Gleitbrettende und/oder am hinteren Gleitbrettende kleiner als 20° oder kleiner als 10° ist.
Aspekt 12 Schneegleitbrett nach einem der Aspekte 7 bis 9, wobei sich der Neigungswinkel α vom Bindungsbereich (B) aus in Gleitbrettlängsrichtung (X) vergrößert.
Aspekt 13 Schneegleitbrett nach einem der Aspekte 3 bis 10, wobei die Schlaufenlängsabschnitte (27) am vorderen Gleitbrettende und/oder am hinteren Gleitbrettende in der Draufsicht von inneren Schlaufenbögen (28) ausgehend in Richtung auf einen äußeren Rand des Schneegleitbretts sternförmig verlaufen.
Aspekt 14 Schneegleitbrett nach einem der Aspekte 3 bis 11, wobei die Schlaufenlängsabschnitte (27) an ihren einer zentralen Gleitbrettlängsachse (X_{A}) zugewandten inneren Enden über innere Schlaufenbögen (28) und an ihren von der zentralen Gleitbrettlängsachse (X_{A}) abgewandten äußeren Enden über äußere Schlaufenbögen (29) verbunden sind.
Aspekt 15 Schneegleitbrett nach dem vorgehenden Aspekt, wobei die inneren Schlaufenbögen (28) von der zentralen Gleitbrettlängsachse (X_{A}) quer zur Gleitbrettlängsrichtung (X) jeweils einen Abstand (1/2 ∗ y₁) aufweisen.
Aspekt 16 Schneegleitbrett nach einem der Aspekte 3 bis 13, wobei ein Abstand zwischen benachbart nebeneinander liegenden Schlaufenlängsabschnitten (27) in Gleitbrettlängsrichtung (X) variiert.
Aspekt 17 Schneegleitbrett nach dem vorgehenden Aspekt, wobei der Abstand in Richtung auf das vordere Gleitbrettende und/oder in Richtung auf das hintere Gleitbrettende abnimmt.
Aspekt 18 Schneegleitbrett nach einem der vorhergehenden Aspekte, wobei das Fadenmaterial mehrere Fäden oder Fadenabschnitte aufweist, die sich im Bindungsbereich (B) zumindest im Wesentlichen in Gleitbrettlängsrichtung (X) nebeneinander erstrecken.
Aspekt 19 Schneegleitbrett nach einem der vorgehenden Aspekte, wobei
   - der jeweilige Faden (25) in der Draufsicht in einem in Längsrichtung (X) erstreckten linken Seitenschenkel (21), einem in Gleitbrettlängsrichtung (X) erstreckten rechten Seitenschenkel (22) und einem quer zur Gleitbrettlängsrichtung (X) erstreckten, die Seitenschenkel verbindenden Querschenkel (23 oder 24) verläuft und
   - die Seitenschenkel (21, 22) quer zur Gleitbrettlängsrichtung (X) außerhalb des Querschenkels einen Schenkelabstand (y₁) voneinander aufweisen, so dass zwischen den Seitenschenkeln ein zentraler Abschnitt des Schneegleitbretts vom Faden frei bleibt.
Aspekt 20 Schneegleitbrett nach einem der vorgehenden Aspekte, wobei
   - die Verstärkungsstruktur (20) in der Draufsicht einen in Gleitbrettlängsrichtung (X) erstreckten linken Seitenschenkel (21), einen in Gleitbrettlängsrichtung (X) erstreckten rechten Seitenschenkel (22) und einen quer zur Gleitbrettlängsrichtung (X) erstreckten, die Seitenschenkel verbindenden Querschenkel (23 oder 24) umfasst und
   - die Seitenschenkel (21, 22) quer zur Gleitbrettlängsrichtung (X) außerhalb des Querschenkels (23 oder 24) einen Schenkelabstand (y₁) voneinander aufweisen, so dass zwischen den Seitenschenkeln ein zentraler Abschnitt des Schneegleitbretts von der Verstärkungsstruktur (20) frei bleibt.
Aspekt 21 Schneegleitbrett nach einem der zwei unmittelbar vorgehenden Aspekte, wobei die Seitenschenkel (21, 22), der Querschenkel (23 oder 24) und ein weiterer Querschenkel (24 oder 23) der Verstärkungsstruktur (20) in der Draufsicht einen Verstärkungsrahmen bilden, der einen vom vorderen Gleitbrettbereich (A) bis in den hinteren Gleitbrettbereich (C) erstreckten Zentralabschnitt des Schneegleitbretts umgibt.
Aspekt 22 Schneegleitbrett, vorzugsweise nach einem der vorgehenden Aspekte, umfassend:
   - einen vorderen Gleitbrettbereich (A), der ein vorderes Gleitbrettende umfasst,
   - einen hinteren Gleitbrettbereich (C), der ein hinteres Gleitbrettende umfasst,
   - einen in Gleitbrettlängsrichtung (X) zwischen dem vorderen Gleitbrettbereich (A) und dem hinteren Gleitbrettbereich (C) erstreckten Bindungsbereich (B) zur Befestigung einer Gleitbrettbindung zum Halten eines Schuhs,
   - einen Kern (1),
   - einen Obergurt (2),
   - einen Untergurt (3) und
   - eine im Schaufelbereich (A) und/oder im hinteren Endbereich (C) erstreckte Verstärkungsstruktur (10), die mittels eines TFP-Verfahrens hergestellt ist.
Aspekt 23 Schneegleitbrett nach einem der vorgehenden Aspekte, wobei die Verstärkungsstruktur (10; 20) einen Verstärkungsrahmen bildet, der in der Draufsicht einen in Gleitbrettlängsrichtung (X) erstreckten linken Seitenschenkel (11; 21), einen in Gleitbrettlängsrichtung (X) erstreckten rechten Seitenschenkel (12; 22) und einen quer zur Gleitbrettlängsrichtung (X) erstreckten, die Seitenschenkel (11, 12; 21, 22) verbindenden Querschenkel (13 oder 14; 23 oder 24) umfasst.
Aspekt 24 Schneegleitbrett nach dem vorgehenden Aspekt, wobei sich der Querschenkel (13; 23) entweder im vorderen Gleitbrettbereich (A), vorzugsweise am vorderen Gleitbrettende, oder im hinteren Gleitbrettbereich (C), vorzugsweise am hinteren Gleitbrettende, erstreckt.
Aspekt 25 Schneegleitbrett nach einem der zwei unmittelbar vorgehenden Aspekte, wobei die Seitenschenkel (11, 12; 21, 22) quer zur Gleitbrettlängsrichtung (X) einen Schenkelabstand (y₁) voneinander aufweisen.
Aspekt 26 Schneegleitbrett nach einem der vorgehenden Aspekte, umfassend:
   - einen an einer Oberseite des Schneegleitbretts aufragenden erhabenen Abschnitt, der sich vom Bindungsbereich (B) bis zum oder in den vorderen Gleitbrettbereich (C) und/oder vom Bindungsbereich (B) bis zum oder in den hinteren Gleitbrettbereich (C) erstreckt,
   - wobei die Verstärkungsstruktur (10; 20) in der Draufsicht einen in Gleitbrettlängsrichtung (X) neben dem erhabenen Abschnitt erstreckten linken Seitenschenkel (11; 21), einen in Gleitbrettlängsrichtung (X) neben dem erhabenen Abschnitt erstreckten rechten Seitenschenkel (12; 22) und optional einen quer zur Gleitbrettlängsrichtung (X) erstreckten, die Seitenschenkel verbindenden Querschenkel (13 oder 24; 23 oder 24) umfasst und
   - der erhabene Abschnitt über die Verstärkungsstruktur (10; 20) hinaus aufragt.
Aspekt 27 Schneegleitbrett nach dem vorgehenden Aspekt in Kombination mit Anspruch 1, wobei das Fadenmaterial im vorderen Gleitbrettbereich (A) und/oder im hinteren Gleitbrettbereich (C) links und rechts neben dem erhabenen Abschnitt angeordnet ist, den erhabenen Abschnitt vorzugsweise umgibt, und der erhabene Abschnitt über das Fadenmaterial hinaus aufragt.
Aspekt 28 Schneegleitbrett nach einem der Aspekte 19 bis 21 und 25 bis 27, wobei die Seitenschenkel (11, 12; 21, 22) quer zur Gleitbrettlängsrichtung (X) jeweils eine Breite (y₂) haben, die kleiner als der Schenkelabstand (y₁) ist.
Aspekt 29 Schneegleitbrett nach einem der Aspekte 19 bis 21 und 25 bis 28, wobei der Schenkelabstand (y₁) über zumindest einen überwiegenden Teil der Länge der Verstärkungsstruktur (10; 20) konstant ist.
Aspekt 30 Schneegleitbrett nach einem der Aspekte 19 bis 21 und 25 bis 29, wobei die Seitenschenkel (11, 12; 21, 22) quer zur Gleitbrettlängsrichtung (X) jeweils eine Breite (y₂) haben, die sich in Richtung auf den Bindungsbereich (B) verringert, vorzugsweise kontinuierlich verringert.
Aspekt 31 Schneegleitbrett nach einem der der Aspekte 19 bis 21 und 25 bis 30, wobei sich der linke Seitenschenkel (11; 21) vom Querschenkel aus längs des linken Seitenrands des Schneegleitbretts und der rechte Seitenschenkel (12; 22) vom Querschenkel aus längs des rechten Seitenrands des Schneegleitbretts erstreckt.
Aspekt 32 Schneegleitbrett nach einem der Aspekte 19 bis 21 und 25 bis 31, wobei der Querschenkel (13 oder 14; 23 oder 24) in der Draufsicht auf die Verstärkungsstruktur (10; 20) das vordere Gleitbrettende oder das hintere Gleitbrettende bildet.
Aspekt 33 Schneegleitbrett nach einem der Aspekte 19 bis 21 und 25 bis 32, wobei sich die Seitenschenkel (11, 12) vom Querschenkel (13 oder 14) ausgehend in Richtung auf den Bindungsbereich (B) bis maximal zum oder in den Bindungsbereich (B) erstrecken, wobei der Bindungsbereich (B) in Gleitbrettlängsrichtung (X) bei befestigter Gleitbrettbindung bevorzugt bis unter einen Vorderbacken und unter einen Hinterbacken der Gleitbrettbindung reicht.
Aspekt 34 Schneegleitbrett nach dem vorhergehenden Aspekt, wobei die Seitenschenkel (11, 12) vom Querschenkel (13 oder 14) aus gesehen axial vor dem Bindungsbereich (B) enden.
Aspekt 35 Schneegleitbrett, aufgebaut aus mehreren miteinander verbundenen Bauteilen,
   wobei wenigstens eines der Bauteile ein Trägermaterial und ein mit dem Trägermaterial verbundenes Verstärkungsmaterial umfasst, dadurch gekennzeichnet, dass
   das Verstärkungsmaterial mittels eines Verlege-Stickverfahrens auf das Trägermaterial aufgebracht und mit dem Trägermaterial verbunden ist.
Aspekt 36 Schneegleitbrett nach Aspekt 1, wobei das Verstärkungsmaterial wenigstens ein Endlosroving und/oder wenigsten eine Endlosfaser, das/die bevorzugt schlaufenförmig auf dem Trägermaterial aufgelegt und befestigt sind, oder ein Rowing oder mehrere separate Rowings und/oder eine Faser oder mehrere separate Fasern, das/die auf dem Trägermaterial aufgelegt und befestigt sind, aus einem einzigen oder unterschiedlichen Materialen, umfasst.
Aspekt 37 Schneegleitbrett nach dem vorhergehenden Aspekt, wobei ein Rowing ein Verbund von zahlreichen Fasern ist, wobei die Fasern des Rowings aus einem einzigen Material oder aus unterschiedlichen Materialen gebildet sind.
Aspekt 38 Schneegleitbrett nach einem der zwei vorhergehenden Aspekte, wobei einzelne Rowings und/oder einzelne Fasern das Trägermaterial für die übrigen Rowings und/oder Fasern des fertigen wenigstens einen Bauteils mitbilden.
Aspekt 39 Schneegleitbrett nach einem der drei vorhergehenden Aspekte, wobei die Rowings und/oder die Fasern auf dem Trägermaterial in frei wählbarer Geometrie auflegbar sind.
Aspekt 40 Schneegleitbrett nach einem der vorhergehenden Aspekte, wobei die Winkel zwischen benachbarten Rowings oder Fasern über den Schneegleitbrettverlauf variieren.
Aspekt 41 Schneegleitbrett nach dem vorhergehenden Aspekt, wobei sich Rowings oder Fasern wenigstens in Bereichen des wenigstens einen Bauteils von einer Außenkante des Schneegleitbretts, zum Beispiel im Schaufel- und/oder im Endbereich, im Wesentlichen auf kürzestem Weg als Gerade in Richtung einer Mittellängsachse des Schneegleitbretts erstrecken.
Aspekt 42 Schneegleitbrett nach einem der vorhergehenden Aspekte, wobei das Trägermaterial ein Obergurt und/oder ein Untergurt ist.
Aspekt 43 Schneegleitbrett nach einem der vorhergehenden Aspekte, wobei Bauteilbereiche von Bauteilen mit dem mittels Verlege-Stickverfahren aufgebrachten Verstärkungsmaterial nebeneinander und/oder überlappend angeordnet sind.
Aspekt 44 Schneegleitbrett nach einem der vorhergehenden Aspekte, wobei es sich bei dem Verstärkungsmaterial um Rowings und/oder Fäden um Kohlenstoff, Glas, Aramid, Stein (z.B. Basalt), Naturfaser (z.B. Bambus), Kunststoff (z.B. Thermoplastik), Keramik, Textil oder Metall handelt.
Aspekt 45 Schneegleitbrett nach einem der vorhergehenden Aspekte, wobei bei dem Auflege-Stickverfahren verwendete Stickfäden, mit denen die Rowings und/oder die Fasern auf dem Trägermaterial fixiert sind, aus einem Material bestehen, das beim fertigen Schneegleitbrett Bauteileigenschaften, wie beispielsweise Elastizität, Festigkeit, Härte, etc. des Bauteils mit beeinflussen, oder beim fertigen Schneegleitbrett Teil des Trägermaterials sind.
Aspekt 46 Schneegleitbrett nach einem der vorhergehenden Aspekte, wobei das wenigstens eine Bauteil weiterhin ein Material, wie beispielsweise ein Kunstharz, umfasst, in dem die Rowings und/oder Fasern eingebettet sind.
Aspekt 47 Schneegleitbrett nach einem der sieben vorhergehenden Aspekte, wobei das wenigstens eine Bauteil einen Rahmen bildet, der wenigstens den Schaufelbereich und/oder Endbereich des Schneegleitbretts zumindest mitbildet.
Aspekt 48 Schneegleitbrett nach dem vorhergehenden Aspekt, wobei der Rahmen einen ersten Teil für den Schaufelbereich und einen zweiten Teil für den Endbereich umfasst und wobei der erste Teil und der zweite Teil bevorzugt nicht miteinander verbunden sind.
Aspekt 49 Schneegleitbrett nach dem vorhergehenden Aspekt, wobei der erste Teil und/oder der zweite Teil im Wesentlichen hufeisenförmig sind, wobei das offene Ende des hufeisenförmigen ersten Teils und das offene Ende des zweiten Teils sich am Schneegleitbrett gegenüberliegen.
Aspekt 50 Schneegleitbrett nach einem der vorhergehenden Aspekte, wobei das wenigstens eine Bauteil eine Oberseite des Schneegleitbretts bildet, oder das wenigstens eine Bauteil unterhalb eines transparenten oder blickdichten weiteren Bauteils angeordnet ist.
Aspekt 51 Schneegleitbrett nach dem vorhergehenden Aspekt, wobei eine sichtbare Oberfläche des wenigstens einen Bauteils bedruckbar ausgeführt ist.

Im Folgenden werden Ausführungsbeispiel der Erfindung anhand von Figuren näher erläutert. Erfindungswesentliche Merkmale, die nur den Figuren entnommen werden können, zählen zum Umfang der Erfindung und können einzeln oder in gezeigten Kombinationen die Erfindung vorteilhaft weiterbilden.
Die Figuren zeigen:
- Figur 1:: ein Ausführungsbeispiel eines Schneegleitbretts mit einer Verstärkungsstruktur;
- Figur 2:: eine Handskizze eines vorderen Gleitbereichs mit Faserverstärkungsstruktur;
- Figur 3:: beispielhafter Schichtaufbau eines Schneegleitbretts;
- Figur 4:: weiteres Ausführungsbeispiel eines Schneegleitbretts mit einer Verstärkungsstruktur.

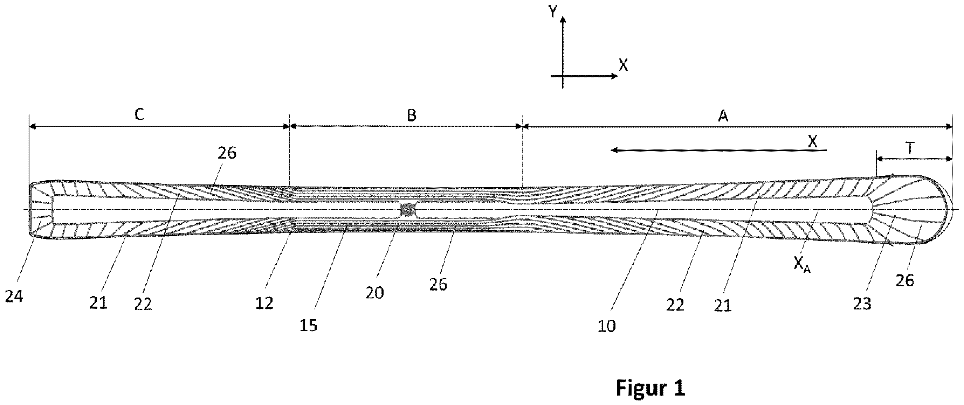

Die Figur 1 zeigt ein Gleitbrett in einer Draufsicht von oben. Das Gleitbrett umfasst einen vorderen Gleitbereich A, der eine Schaufel T umfasst, einen hinteren Gleitbereich C, der ein hinteres Ende des Gleitbretts umfasst, und einen Bindungsbereich C, der zwischen dem vorderen Gleitbereich A und dem hinteren Gleitbereich C angeordnet ist. Der Bindungsbereich B ist hergerichtet, um eine nicht gezeigte Gleitbrettbindung aufnehmen zu können. Der Bindungsbereich B kann zumindest bereichsweise nach oben aus dem Gleitbrett herausragen, so dass eine Fläche des Bindungsbereichs B, auf dem die Bindung montiert werden kann, senkrecht nach oben über eine mittlere Höhe der Gleitbrettoberfläche außerhalb der Schaufel T vorsteht.

Das Gleitbrett, respektive die in der Draufsicht erkennbare obere Schicht des Gleitbretts umfasst eine Verstärkungsstruktur 12, die eine oder eine Vielzahl von Fasern 20 und/oder einen oder eine Vielzahl von Rovings 20 umfasst, die mit einem Grundmaterial 10 verbunden sind, so dass sie sich relativ zu diesem Grundmaterial 10 nicht bewegen können. Unter Rovings 20 wird ein Bündel von Fasern 20 verstanden, wobei das Bündel aus Fasern 20 aus einem einzigen Material oder aus Fasern 20 unterschiedlicher Materialien bestehen kann.

Die Fasern 20 oder die Rovings 20 können zur Bildung der Verstärkungsstruktur 15 mit dem Grundmaterial 10 verschmolzen und/oder auf das Grundmaterial 10 aufgeklebt und/oder aufgenäht sein. Bevorzugt können die Fasern 20 oder Rovings 20 mittels eines TFP-Verfahrens auf das Grundmaterial 10 aufgelegt und in einer Sticktechnik auf dem Grundmaterial 10 fixiert werden. Bei der weiteren Verarbeitung können die Fasern 20 oder Rovings 20 dann mit dem Grundmaterial 10 fest verbunden werden, so dass die Fasern 20 oder Rovings 20 nicht mehr zerstörungsfrei von dem Grundmaterial 10 gelöst werden können. Diese Verbindung kann zum Beispiel durch eine Zufuhr von Wärme und/oder von Druck beim Fertigstellen des Schneegleitbretts erfolgen. Diese Verstärkungsstruktur 12 liegt dann quasi als Halbzeug vor, das bereits die Maße zur weiteren Verarbeitung im Schneegleitbrett aufweist oder auf dieses Maß erst noch zugeschnitten werden muss.

Im Folgenden wird die Verstärkungsstruktur 12 meistens anhand der Fasern 20 erläutert, um den Text leicht lesbar zu halten. Es wird aber ausdrücklich festgehalten, dass das zu den Fasern 20 Gesagte - mutatis mutandis - auch für die Rovings 20 gilt, und dass eine Verstärkungsstruktur 12 Fasern 20 oder Rovings 20 oder Fasern 20 und Rovings 20 umfassen kann.

In der Figur 1 ist gezeigt, dass die Fasern 20, die die Verstärkungsstruktur 12 bilden, relativ zum Schneegleitbrett oder zu der Schneegleitbrettlängsachse X_{A} in einem beliebigen Winkel angeordnet sein können. Im Ausführungsbeispiel beispielsweise verlaufen die Fasern 20 im Bereich der Schaufel T strahlenförmig auseinander. In Schneegleitbrettlängsrichtung X hinter der Schaufel T, im vorderen Gleitbereich A verlaufen die Fasern 20 zunächst im Wesentliche quer zur Schneegleitbrettlängsachse X_{A} und parallel zueinander, vor dem Bindungsbereich verlaufen die Fasern schräg und im Wesentlichen parallel zueinander.

Der Verlauf oder die Ausrichtung der Fasern 20 und/oder Rovings 20 kann innerhalb eines Bereichs variieren. Dabei können die Fasern 20 und/oder die Rovings 20 einander kreuzen, das heißt, zumindest punktuell übereinander liegen. Die Fasern 20 und/oder Rovings 20 können auch in mehreren Schichten übereinander liegen, wobei jede der Schichten für sich eine einheitliche Ausrichtung der Fasern 20 und/oder Rovings 20 aufweisen kann, und die Ausrichtungen übereinander liegender Schichten unterschiedlich sind. Die Schichten können sich in dem Bereich vollständig oder nur teilweise überlappen, so dass beispielsweise ein äußerer Randbereich des Schneegleitbretts wegen der dort verstärkt auftretenden mechanischen Belastungen zusätzlich verstärkt sein kann.

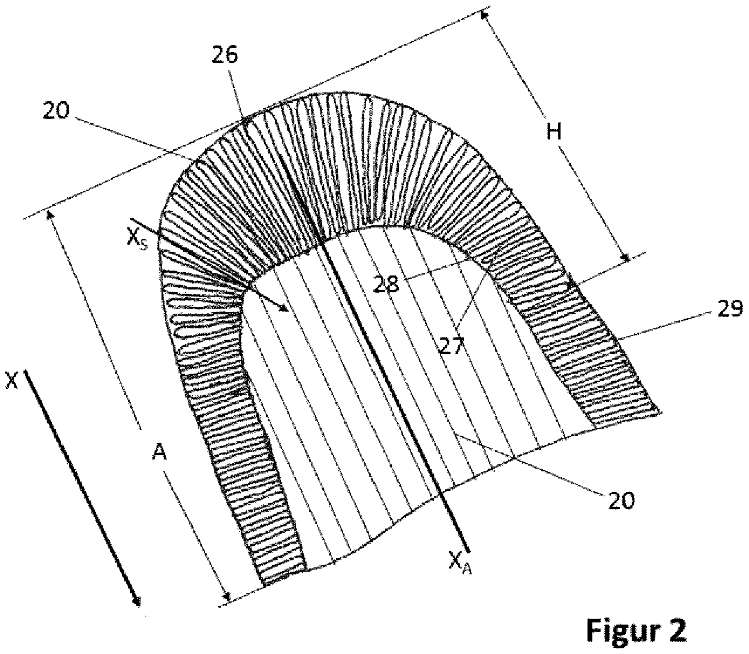

Im Bindungsbereich B verlaufen die Fasern 20 parallel zur Schneegleitbrettlängsachse X_{A} (siehe Figur 2) und liegen im Ausführungsbeispiel dicht beieinander.

Hinter dem Bindungsbereich B stehen die Fasern dann zunächst wieder schräg zu der Schneegleitbrettlängsachse X_{A} und verlaufen im Wesentlichen parallel zueinander. Daran anschließend stehen die Fasern in Wesentlichen wieder quer zur Schneegleitbrettlängsachse X_{A} und parallel zueinander. Am hinteren Ende verlaufen die Fasern 20 wieder parallel zur Schneegleitbrettlängsachse X_{A}.

Bei den Fasern 20 kann es sich um zahlreiche kurze Fasern 20 handeln, die einzeln verlegt werden, um das gezeigt Muster zu erhalten. Statt zahlreicher kurzer Fasern 20 können auch Endlosfasern benutzt werden, die so auf das Grundmaterial 10 aufgelegt werden, dass sie das gewollte Muster abbilden. Das Arbeiten mit den Endlosfasern und/oder den Endlosfasern hat den Vorteil, dass der Auflegevorgang bei der Herstellung der Verstärkungsstruktur 12 nicht ständig unterbrochen und neu begonnen werden muss, sondern kontinuierlich durchgeführt werden kann. Dies spart Zeit und damit Kosten. Ist das gewollte Muster so nicht unmittelbar darstellbar, wird die Fläche des Grundmaterial 10 so dimensioniert, dass das mit den Fasern 20 und/oder Rovings 20 bestückte Grundmaterial 10 anschließend auf eine Verarbeitungsgröße zugeschnitten werden kann, so dass dann der Zuschnitt das gewollte Muster aufweist.

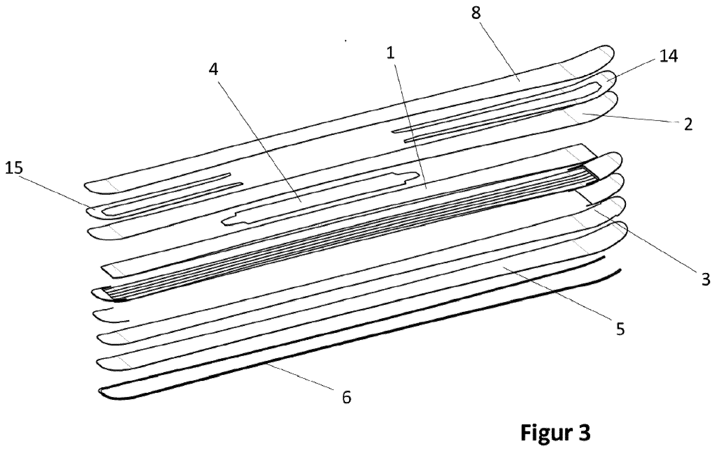

Im Ausführungsbeispiel bildet die Fasern 20 auf dem Grundmaterial 10 eine rahmenförmige Verstärkungsstruktur 12 aus, mit mittleren Bereichen ohne Fasern 20 und/oder Rovings 20. Die Verstärkungsstruktur 12 umfasst einen ersten Seitenschenkel 21, einen zweiten Seitenschenkel 22, einen ersten Querschenkel 23 und einen zweiten Querschenkel 24. Der faserfreie Bereich kann das Grundmaterial 10 umfassen, grundsätzlich kann die Verstärkungsstruktur 12 in dem faserfreien Bereich aber auch kein Grundmaterial 10 aufweisen. Die Fasern 20 müssen auch keinen geschlossenen Rahmen bilden, wie dargestellt, sondern können separate Verstärkungsstrukturteile 14, 15 (siehe Figur 3) bilden, die das Schneegleitbrett nur lokal verstärken, beispielweise ein erstes Verstärkungsstrukturteil 14 im Bereich der vorderen Gleitfläche A und der Schaufel T, und ein zweites Verstärkungsstrukturteil 15 im Bereich der hinteren Gleitfläche C. Der Bindungsbereich B kann in diesem Fall keine Verstärkungsstruktur 12 mit den Fasern 20 und/oder eine separate Verstärkungsstruktur, die weder mit dem ersten Verstärkungsstrukturteil 14 noch mit dem zweiten Verstärkungsstrukturteil 15 verbunden ist, umfassen.

Statt der beispielhaft gezeigten Rahmenstruktur kann die Verstärkungsstruktur 12 auch mehrere flächige Teilstrukturen umfassen, die zum Beispiel skelettartig aufgebaut sein können, um das Gewicht des Schneegleitbretts möglichst gering zu halten. Bei mehreren separaten Verstärkungsstrukturteilen 14, 15, egal ob Rahmen oder in einer anderen Form, kann jedes Verstärkungsstrukturteil 14, 15 ein von einem anderen Verstärkungsstrukturteil 14, 15 unterschiedliches Fasermaterial umfassen. Die verwendeten Fasern 20 können an die individuellen Anforderungen des jeweiligen Verstärkungsstrukturteils 14, 15 angepasst werden.

Die Figur 2 zeigt in einer Handskizze einen vorderen Gleitbereich A mit der Schaufel T. Hier ist dargestellt, dass die Faser 20 in einem Außenbereich in Schlaufen 26 verlegt wurde, wobei jede der Schlaufen 26 in Schlaufenlängsrichtung Xₛ wenigstens einen Schlaufenlängsabschnitt 27 umfasst. Jeweils zwei benachbarte Schlaufenlängsabschnitte 27 sind über einen inneren Schlaufenbogen 28 beziehungsweise einen äußeren Schlaufenbogen 29 miteinander verbunden. Die äußeren Schlaufenbögen 29 verlaufen an oder nahe bei einer Außenkante des Schneegleitbretts, die inneren Schlaufenbögen 28 verlaufen beabstandet von den äußeren Schlaufenbögen 29 näher an der Schneegleitbrettlängsachse X_{A}, die eine Mittelachse des Schneegleitbretts in Längsrichtung ist.

Im skizzierten Beispiel verlaufen die Schlaufenlängsabschnitte 27 im Bereich der Schaufel T strahlenförmig nach außen, die äußeren Schlaufenbögen 29 haben einen größeren Durchmesser, als die inneren Schlaufenbögen 28. Hinter der Schaufel T sind die Fasern 20 in Rechteckschlaufen verlegt, mit inneren Schlaufenbögen 28 und äußeren Schleifenbögen 29, die gleich groß sind. Der Übergang von den Schlaufen 26 der Schaufel T zu den Rechteckschleifen im anschließenden Bereich verläuft abrupt, so dass zwei klar voneinander zu unterscheidende Bereiche mit unterschiedlich verlegten Fasern 20 entstehen.

In einem Innenbereich weist der vordere Gleitbrettbereich A in Schneegleitbrettlängsrichtung X, parallel zu der Schneegleitbrettlängsachse X_{A} verlaufende Fasern 20 und/oder Rovings 20 auf. Die Fasern 20 und/oder Rovings 20 sind nicht schlaufenförmig verlegt und weisen zueinander einen Abstand auf, der wesentlich größer ist als ein Abstand zwischen benachbarten Schlaufenlängsabschnitten 27 in beiden Bereichen des Außenbereichs. Im gezeigten Ausführungsbeispiel bilden der Innenbereich einen dritten separaten Bereich des vorderen Gleitbrettbereichs A aus, mit einer Ausrichtung der Fasern 20 und/oder Rovings, die unterschiedlich zur Ausrichtung in den beiden aneinander anschließenden Bereichen des Außenbereichs ist.

Alternativ können sich die Fasern 20 und/oder Rovings 20 des Innenbereichs über die gesamte Fläche des Schneegleitbretts zumindest in dem in Figur 2 gezeigten Abschnitt erstrecken und von den Fasern 20 und/oder Rovings 20 des Außenbereichs überlagert sein.

Bei dem in der Figur 2 dargestellten Verstärkungsstruktur 12 kann es sich um ein zweidimensionales Halbzeug handeln, das vor dem Verbau in dem Schneegleitbrett noch zugeschnitten wird. Bei diesem Zuschnitt können die äußeren Schlaufenbögen 29 weggeschnitten werden, so dass die Schlaufenlängsabschnitte 27 beim fertigen Schneegleitbrett an dessen äußerem Umfang enden.

Bei der Verlegung der Fasern 20 und/oder Rovings 20 in Schlaufen 26 können beim Zuschnitt des Halbzeugs für die Verstärkungsstruktur 12 auf die Verarbeitungsgröße der Verstärkungsstruktur 12 zumindest die äußeren Schlaufenbögen 29 weggeschnitten werden, so dass im fertigen Schneegleitbrett die Fasern 20 oder Rovings 20 zumindest in Bereichen des äußeren Umfangsrands keinen äußeren Schlaufenbogen 29 mehr aufweist. Gleiches kann für die inneren Schlaufenbögen 28 gelten, wenn die Verstärkungsstruktur 12 Öffnungen, wie Ausstanzungen, in einem Bereich aufweist, der innere Schlaufenbögen 28 aufweist.

Die Figur 3 zeigt in einer Explosionszeichnung ein beispielhaftes Schneegleitbrett mit allen Schichten, die zusammengefügt werden, um das fertige Schneegleitbrett zu bilden. Zur Beschreibung der Erfindung ist es nicht notwendig, sämtliche in dem Beispiel gezeigte Schichten zu bestimmen und zu beschreiben.

Beginnend von unten zeigt die Figur 3: Kanten 6, eine Laufflächenschicht 5, einen Untergurt 3, einen Kern 1, eine Verstärkungsplatte 4 im Bereich B des Schneegleitbretts für die Bindung, einen Obergurt 2, eine Verstärkungsstruktur 15, hier aus einem vorderen Verstärkungsstrukturteil 14 und einem Verstärkungsstrukturteil 15, und schließlich einen Deckel 8, der eine Oberseite des Schneegleitbretts bildet. Der Deckel 8 kann zumindest bereichsweise transparent sein, so dass die Verstärkungsstruktur 12 beim fertigen Schneegleitbrett ein Designelement bilden kann.

Wie im Beispiel gezeigt, kann die Verstärkungsstruktur 12 direkt unter dem Deckel 8 und oberhalb des Kerns 1 angeordnet sein. Die Verstärkungsstruktur 12 kann selbst einen Teil des Deckels 8 bilden oder unterhalb des Obergurts 2 aber über dem Kern 7 angeordnet sein. Die Verstärkungsstruktur 12 kann aber auch zumindest teilweise im fertigen Schneegleitbrett unterhalb des Kerns 1 angeordnet sein.

In dem Fall, dass die Verstärkungsstruktur 12 selbst den Deckel 8 mitbildet, kann die Verstärkungsstruktur 12 einen Schutzanstrich aus einem Klarlack oder einem ähnlichem Material aufweisen, um möglichst lange eine ansehnliche Optik der Oberfläche des Gleitbretts zu erhalten. Die Verstärkungsstruktur 12 selbst kann auch eine bedruckbare Oberfläche aufweisen, so dass beispielsweise eine Marke, ein Logo oder andere Informationen direkt auf die Verstärkungsstruktur 12 aufgedruckt werden können.

Das erste Verstärkungsstrukturteil 14 und das zweite Verstärkungsstrukturteil 15 können auch, anders als im Beispiel der Figur 3 gezeigt, unterschiedlichen Schichten zugeordnet sein. So kann eines der Verstärkungsstrukturteile 14, 15 über dem Obergurt 2, der andere unter dem Obergurt 2 oder neben dem Obergurt 2, der in diesem Fall einen entsprechenden Zuschnitt aufweist, angeordnet sein. Ist eine Verstärkungsstrukturteil 14, 15 in diesem Sinn neben dem Obergurt 2 angeordnet, bildet es quasi im gezeigten Schneegleitbrettaufbau einen Teil der Lage des Obergurts 2.

Wie gezeigt, kann die Verstärkungsstruktur 12 als Halbzeug hergestellt und in einem Lager für eine weitere Verarbeitung bevorratet werden. Es ist möglich, die Verstärkungsstruktur 12 individuell an die Fähigkeiten des einzelnen Schneegleitbrettfahrers anzupassen, wobei die individuellen Fähigkeiten zum Beispiel auf einem speziellen Teststand ermittelt werden können.

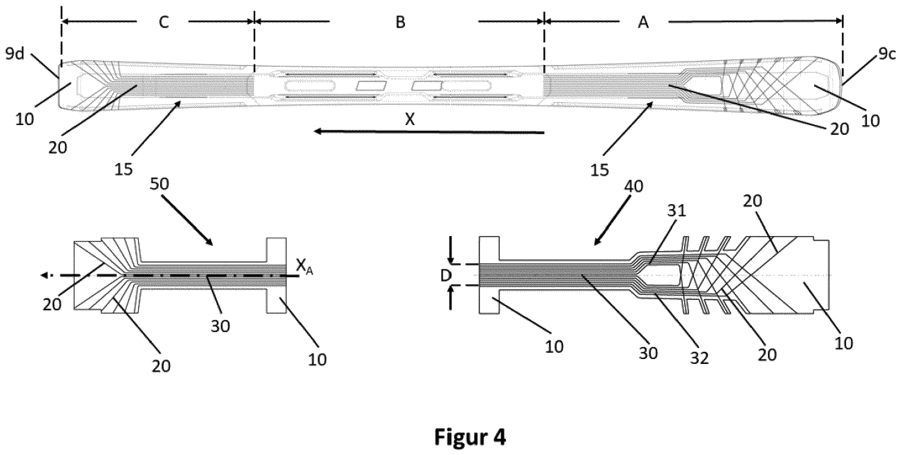

Die Figur 4 zeigt eine weiteres Gleitbrett in einer Draufsicht. Das Gleitbrett umfasst einen Verstärkungsstrukturteil 14 im vorderen Gleitbrettbereich A und eine Verstärkungsstrukturteil 15 im hinteren Gleitbrettbereich C, wobei beide Bereiche A und C weitere gezielte Verstärkungen, die jeweils aus einem Trägermaterial 10 und damit verbundenen Fasern 20 oder Rovings 20 gebildet sind, aufweisen.

Diese Verstärkungen sind in der Figur 4 gesondert als Faserverbundstoffhalbzeug 40 für den vorderen Gleitbrettbereich A bzw. als Faserverbundstoffhalbzeug 50 für den hinteren Gleitbrettbereich C dargestellt. Die Faserverbundstoffhalbzeuge 40 und 50 in ihrer dargestellten zweidimensionalen Rohform weisen zumindest im Bereich des vorderen Gleitbrettendes 9c und des hinteren Gleitbrettendes 9d ein Übermaß auf.

Das Faserverbundstoffhalbzeug 40 umfasst das Grundmaterial 10 und mit dem Grundmaterial verbundene Fasern 20 oder Rovings 20. Das Faserverbundstoffhalbzeug 50 hat eine Länge, die im Wesentlichen dem Abstand des vorderen Gleitbrettendes 9c von dem dem vorderen Gleitbrettende 9c zugewandten Ende des Bindungsbereichs B, der zwischen dem vorderen Gleitbrettbereich A und dem hinteren Gleitbrettbereich C angeordnet ist, entspricht. Beginnend am Bindungsbereich C verlaufen die Fasern 20 in einem Hauptstrang 30 im Wesentlichen parallel zueinander und im Wesentlichen parallel zu der Schneegleitbrettlängsachse X_{A}. Dabei können die Fasern 20 des Hauptstrangs 30 am Bindungsbereich C enden oder sich bis unter oder in den Bindungsbereich C erstrecken.

Der Hauptstrang 30 hat im Wesentlichen eine Breite D quer zur Schneegleitbrettlängsrichtung X, die einem Abstand der einander zugewandten Innenseiten der Seitenschenkel 21, 22 des Verstärkungsstrukturteils 14 (siehe Figur 1) entspricht. Im Ausführungsbeispiel teilt sich der Hauptstrang 30 vor Erreichen des vorderen Gleitbrettendes 9c in zwei identische Teilstränge 31, 32 auf, in denen die Fasern zunächst weg von der Schneegleitbrettmittelachse X_{A} nach außen verlaufen, wobei sie immer noch im Wesentlichen parallel zueinander ausgerichtet sind. Schließlich knicken die einzelnen Fasern 20 oder Rovings 20, beginnend mit den beiden der Schneegleitbrettmittelachse X_{A} am nächsten liegenden Fasern 20, in Richtung zur Schneegleitbrettachse X_{A} ab, queren die Fasern 20 des jeweiligen anderen Teilstrangs 31, 32 und erstrecken sich nach außen über das Trägermaterial 10 hinaus. Die geschieht nacheinander mit allen Fasern 20 des ersten Teilstrangs 31 und des zweiten Teilstrangs 32 wobei sich der Knickwinkel, das heißt, der Winkel, den die Schneegleitbrettachse X_{A} mit den Fasern 20 bildet, die die Fasern 20 der verbleibenden Teilstränge 31, 32 queren, ständig verkleinert. Im Ausführungsbeispiel ist der erste Knickwinkel ca. 90°, der dem vorderen Gleitbrettende am nächsten liegende Knickwinkel dagegen nur ca. 45°. Dadurch ergibt sich das gitterförmige Muster der Fasern 20, wie in der Figur 4 dargestellt.

Für das Faserverbundstoffhalbzeug 50 gilt im Wesentliche das gleiche wie zum Faserverbundstoffhalbzeug 40, nur dass der Hauptstrang 30 sich an seinem dem Bindungsbereich C abgewandten Ende strahlenförmig auflöst.

### Bezugszeichenliste:

- 1: Kern
- 2: Obergurt
- 3: Untergurt
- 4: Verstärkungsplatte
- 5: Laufflächenschicht
- 6: Kanten
- 8: Deckel
- 9a: Schaufel
- 9b: Endbereich
- 9c: vorderes Gleitbrettende
- 9d: hinteres Gleitbrettende
- 10: Grundmaterial
- 12: Verstärkungsstruktur
- 14: Verstärkungsstrukturteil
- 15: Verstärkungsstrukturteil
- 20: Faser, Roving
- 21: Seitenschenkel
- 22: Seitenschenkel
- 23: Querschenkel
- 24: Querschenkel
- 26: Schlaufe
- 27: Schlaufenlängsabschnitt
- 28: innerer Schlaufenbogen
- 29: äußerer Schlaufenbogen
- 30: Hauptstrang
- 31: Teilstrang
- 32: Teilstrang
- 33: Außenseite
- 34: Außenseite
- 40: Faserverbundstoffhalbzeug
- 50: Faserverbundstoffhalbzeug
- A: vorderer Gleitbrettbereich
- B: Bindungsbereich
- C: hinterer Gleitbrettbereich
- D: Breite
- H: Schaufel
- X: Schneegleitbrettlängsrichtung
- Y: Schneegleitbrettquerrichtung
- X_{A}: Schneegleitbrettlängsachse
- X_{S}: Schleifenlängsrichtung

## Patentansprüche

1. Schneegleitbrett, vorzugsweise Gleitbrett, umfassend:
1.1 einen vorderen Gleitbrettbereich (A), der ein vorderes Gleitbrettende umfasst,
1.2 einen hinteren Gleitbrettbereich (C), der ein hinteres Gleitbrettende umfasst,
1.3 einen in Gleitbrettlängsrichtung (X) zwischen dem vorderen Gleitbrettbereich (A) und dem hinteren Gleitbrettbereich (C) erstreckten Bindungsbereich (B) zur Befestigung einer Gleitbrettbindung zum Halten eines Schuhs,
1.4 wobei das Schneegleitbrett eine mehrschichtige Struktur aufweist, die mindestens einschließt:
1.4.1 einen Gleitbrettkern (1),
1.4.2 obere Schichten (2; 8), die oberhalb des Gleitbrettkerns (1) angeordnet sind, und
1.4.3 untere Schichten (3; 5), die unterhalb des Gleitbrettkerns (1) angeordnet sind
wobei wenigstens eine Schicht (2) der oberen Schichten (2; 8) und/oder wenigstens eine Schicht (3) der unteren Schichten (3; 5) einen Faserverbundwerkstoff aufweist,
wobei der Faserverbundwerkstoff eine Vielzahl von Fasern (20) aufweist,
**dadurch gekennzeichnet, dass** der Faserverbundwerkstoff in einem Bereich (A, B, C, H) eine Faserorientierung aufweist, welche innerhalb des Bereichs (A, B, C, H) variiert.

2. Schneegleitbrett nach Anspruch 1, wobei zumindest zahlreiche der Fasern (20) zu einem oder mehreren Faserbündeln, sogenannten Rovings (20), zusammengefügt sind und die Fasern (20) und/oder der Roving/die Rovings (20) in einem Verlege-Stickverfahren auf einem Grundmaterial (10) verlegt und fixiert ist/sind.

3. Schneegleitbrett nach Anspruch 2, wobei es sich bei dem Verlege-Stickverfahren um ein Tailored-Fiber-Placement-Verfahren (TFP) handelt.

4. Schneegleitbrett nach einem der vorhergehenden Ansprüche, wobei der Faserverbundwerkstoff zahlreiche kurze Fasern (20) und/oder Rovings (20) und/oder Endlosfasern und/oder Endlosrovings umfasst, von denen jede/r einzelne relativ zum Schneegleitbrett beliebig ausrichtbar ist.

5. Schneegleitbrett nach dem vorhergehenden Anspruch, wobei zumindest ein Teil der Fasern (20) und/oder Rovings (20) in einer Draufsicht auf das Schneegleitbrett mäanderförmig, schlingenförmig oder schlaufenförmig verlaufen.

6. Schneegleitbrett nach dem vorhergehenden Anspruch, wobei die Schlaufen (16) innere Schlaufenbögen (28) und/oder äußere Schlaufenbögen (29) und Schlaufenlängsabschnitte (27) umfassen, wobei die Schlaufenlängsabschnitte (27) jeder einzelnen der Schlaufen (26) gerade oder bogenförmig und bevorzugt parallel zueinander oder in einem Winkel zusammen oder aufeinander zu oder auseinander oder voneinander weg verlaufen.

7. Schneegleitbrett nach dem vorhergehenden Anspruch, wobei die Schlaufenlängsabschnitte (27) eine Schlaufenlängsrichtung (X_{S}) definieren die zumindest im vorderen Gleitbrettbereich (A) und/oder im hinteren Gleitbrettbereich (C) einen Neigungswinkel α zu einer zentralen Schneegleitbrettlängsachse (X_{A}) mit 0°≤ α ≤ 90° und wobei bevorzugt der Neigungswinkel α in Schneegleitbrettrichtung (X) variiert.

8. Schneegleitbrett nach einem der vorhergehenden Ansprüche, wobei der Faserverbundwerkstoff eine rahmenförmige Verstärkungsstruktur (12) mit einem ersten Seitenschenkel (21), einem zweiten Seitenschenkel (22), einem ersten Querschenkel (23) und einem zweiten Querschenkel (24) bildet, wobei die rahmenförmige Verstärkungsstruktur einteilig oder mehrteilig aufgebaut ist.

9. Schneegleitbrett nach dem vorhergehenden Anspruch, wobei der erste Seitenschenkel (21) und der zweite Seitenschenkel (22) in Schneebrettgleitquerrichtung (Y) im Bereich außerhalb des/der Querschenkel (23, 23) einen Schenkelabstand haben, der frei von dem Faserverbundwerkstoff ist.

10. Schneegleitbrett nach einem der vorhergehenden Ansprüche, wobei das Schneegleitbrett einen aufragenden erhabenen Oberseitenabschnitt hat, der sich bevorzugt vom Bindungsbereich (B) bis zum oder in den vorderen Gleitbrettbereich (A) und/oder der Bindungsbereich (B) bis zum oder in den hinteren Gleitbrettbereich (C) erstreckt.

11. Faserverbundwerkstofflage für ein Schneegleitbrett, insbesondere einen Gleitbrett, wobei die Faserverbundwerkstofflage in einem ersten Bereich (H) eine Vielzahl von gerichteten Fasern (20) und/oder Rovings (20) und in einem an den ersten Bereich angrenzenden zweite Bereich (A) eine Vielzahl von gerichteten Fasern (20) und/oder Rovings (20) aufweist, **dadurch gekennzeichnet, dass** eine Ausrichtung der Fasern (20) und/oder Rovings (20) im ersten Bereich (H) von einer Ausrichtung der Fasern (20) und/oder Rovings (20) im zweiten Bereich (A) unterschiedlich ist.

12. Faserverbundwerkstofflage nach dem vorhergehenden Anspruch, wobei der Faserverbundwerkstoff eine Verstärkungsstruktur (12) bildet.

13. Faserverbundwerkstofflage nach einem der zwei vorhergehenden Ansprüche, wobei die Fasern (20) aus Kohlenstoff-, Glas-, Aramid-, Stein-, Naturfaser-, Kunststoff-, Textil-, Metall- oder Keramikmaterial gebildet sind und Rovings (20) bevorzugt aus einer Vielzahl von Fasern (20) aus einem einzigen Material oder unterschiedlichen Materialien bestehen.

14. Faserverbundwerkstofflage nach einem der drei vorhergehenden Ansprüche, wobei die Fasern (20) und/oder Rovings (20) der Faserverbundwerkstoff auf einem Grundmaterial (2)) mittles eine TFP-Verfahrens in einem vorgebbaren Muster verlegt werden.

15. Faserverbundwerkstofflage nach dem vorhergehenden Anspruch, wobei die Fasern (20) und/oder Rovings (20) auf dem Grundmaterial schlaufenförmig verlegt sind.
